# FASCICULE DE BREVET EUROPEEN

(11) **EP 1 298 036 B1**
(45) Date de publication et mention de la délivrance du brevet: **07.03.2007**
(21) Numéro de dépôt: 02292339.5
(22) Date de dépôt: 24.09.2002
(51) Int. Cl.: B62D 25/16, B60R 13/08, B62D 29/04

(54) **Aile de véhicule automobile, telle qu'une aile avant**
Kraftfahrzeug-Kotflügel, sowie vorderer Kotflügel
Vehicle fender, like front fender

(30) Priorité: 27.09.2001 FR 0112424
(43) Date de publication de la demande: 02.04.2003
(73) Titulaire: Peugeot Citroen Automobiles, 92200 Neuilly Sur Seine (FR)
(72) Inventeur: Perrot, Philippe, 25200 Montbeliard (FR)
(74) Mandataire: Seytre, Françoise

(56) Documents cités:
- EP-A- 0 853 032
- DE-A- 19 729 804
- GB-A- 2 046 183
- US-A- 5 483 028
- PATENT ABSTRACTS OF JAPAN vol. 2000, no. 11, 3 janvier 2001 (2001-01-03) & JP 2000 233693 A (TOKAI RUBBER IND LTD), 29 août 2000 (2000-08-29)

## Description

La présente invention concerne une aile de véhicule automobile, tel qu'une aile avant.

Elle concerne plus particulièrement une aile, dont un bord présente un profil circulaire destiné à épouser celui d'une roue du véhicule et comprenant une peau qui s'étend selon un axe longitudinal (x), au moins une joue venue de matière avec la peau et qui s'étend selon un axe (y) sensiblement perpendiculaire à la peau et des moyens pour amortir les bruits qui se propagent, à l'arrêt ou lors du roulage du véhicule, entre l'aile et la partie de carrosserie sur laquelle elle est destinée à être fixée lesdits moyens d'amortissement étant fixés au moins partiellement à l'aile.

De nombreux développements récents dans l'automobile ont pour but de réduire considérablement le niveau sonore dans l'habitacle des véhicules et ce, dans un soucis de confort amélioré pour le conducteur et ses passagers.

En particulier, l'isolation acoustique de l'habitacle des bruits provenant de l'avant du véhicule est un aspect important de l'isolation globale du véhicule. En effet, ces bruits sont nombreux et d'origines variées et peuvent se superposer les uns aux autres. Ainsi, outre les bruits importants provenant du groupe motopropulseur, tels que ceux émis par le moteur, la boite de vitesses ou l'embrayage, les bruits résultant des turbulences aérodynamiques dans les passages de roue peuvent atteindre des amplitudes importantes. En outre, les chuintements des pneus sur des sols mouillés ou sur des sols gravillonneux engendrent également des bruits importants.

Plusieurs solutions ont déjà été proposées pour amortir ces bruits.

Une première solution consiste à réaliser un double joint au niveau des portes avant. La position présumée d'un tel joint travaille mal en vieillissement du fait des efforts de cisaillement conséquents subis. De plus, le coût d'un tel joint est élevé.

Une autre solution, telle qu'elle est actuellement implantée sur véhicule, consiste à réaliser une barrière d'absorption des bruits bloquée par coincement à la joue de l'aile. L'inconvénient majeur de cette solution réside dans le fait que la barrière utilisée est constituée par un pain de mousse à cellules fermées ensachées pour éviter des rétentions d'eau à l'intérieur qui entraineraient des moisissures. Ces cellules fermées sont bien moins isolantes d'un point de vue acoustique que les cellules ouvertes. Un autre inconvénient est que le pain de mousse doit être nécessairement monté sur le véhicule sur la ligne de finition car le pain de mousse ne résiste pas aux températures régnant dans les étuves de peinture de la caisse et des ailes du véhicule.

Une autre solution encore, décrite dans le brevet JP 2000 233769 consiste à fixer une pièce munie de chambres d'interférence directement sur le pourtour du passage de roue de sorte que les bruits provenant des roues et de leur pneu associé sont amortis du fait de la différence de longueur d'onde introduite entre les bruits émanant directement des roues et ceux se propageant par le passage de roue. Cette solution n'est, par définition, vraiment efficace que pour les bruits provenant directement des roues. En outre, le montage de la pièce autour du passage de roue est délicat à réaliser et la différence de longueur d'onde difficile à obtenir.

Selon une autre solution, décrite dans le brevet US-A-5 839 761 il est connu des systèmes d'absorption du bruit, comportant des résonateurs destinés à être montés sur un profil circulaire épousant celui d'une roue qui ne permettent pas d'amortir les bruits susceptibles de se propager entre l'aile et la caisse du véhicule.

Une autre solution enfin, décrite dans le brevet EP 0 716 408, consiste à monter une barrière, constituée d'empreintes trapézoïdales réfléchissant les bruits, tout le long du passage de roue circulaire en comblant l'espace entre l'aile avant et la partie de la caisse sur laquelle elle est fixée. Cette solution n'est, tout comme la précédente, vraiment efficace que pour les bruits provenant directement des roues. De plus, le montage de cette barrière doit vraiment être précis.

Le but de l'invention est alors de pallier tout ou partie des inconvénients précités.

Pour ce faire, l'invention a pour objet une aile de véhicule automobile, telle qu'une aile avant, dont un bord présente un profil circulaire destiné à épouser celui d'une roue du véhicule et comprenant une peau qui s'étend selon un axe longitudinal (x), au moins une joue venue de matière avec la peau et qui s'étend selon un axe (y) sensiblement perpendiculaire à la peau et des moyens pour amortir les bruits qui se propagent, à l'arrêt ou lors du roulage du véhicule, entre l'aile et la partie de carrosserie sur laquelle elle est destinée à être fixée, lesdits moyens d'amortissement des bruits étant fixés au moins partiellement à l'aile remarquable en ce que les moyens d'amortissement des bruits comprennent une pluralité de chicanes formant labyrinthe fixées sur une partie substantielle de la hauteur d'une partie de la joue et adaptées pour augmenter la longueur de propagation desdits bruits le long de la joue d'aile.

De préférence, les chicanes ont une section rectangulaire.

Selon une caractéristique supplémentaire de l'invention, les chicanes sont fixées par collage, clippage ou soudage à la joue.

Selon un mode de réalisation préféré de l'invention dans lequel la joue et la peau constituent une pièce monobloc, les chicanes sont réalisées dans le même matériau que la pièce monobloc.

Selon ce même mode, les chicanes sont surmoulées directement sur la joue.

Selon ce même mode encore, l'aile est avantageusement en matériau thermoplastique.

Selon une variante de l'invention, les moyens d'amortissement des bruits comprennent en outre un diffuseur fixé à une partie de la joue et adapté pour réfléchir au moins une partie desdits bruits selon une direction aléatoire.

Ce diffuseur est avantageusement constitué d'un ou plusieurs cubes fragmentés et/ou de lamelles ondulées disposées selon des directions non parallèles entre elles.

De préférence, le diffuseur est fixé sur une partie substantielle de la hauteur de la joue en étant situé devant les chicanes.

De préférence encore, le diffuseur est fixé sur l'extrémité inférieure de la joue.

Selon une autre caractéristique de l'invention, la partie de la joue sur laquelle est fixée la pluralité de chicanes et éventuellement le diffuseur s'étend selon le plan de forme de la peau ou selon un autre plan parallèle audit plan de forme.

L'invention concerne enfin un véhicule automobile comprenant au moins une aile avant telle que décrite précédemment.

D'autres avantages et caractéristiques de l'invention ressortiront mieux à la lecture de la description détaillée ci-dessous faite en référence aux figures suivantes qui représentent:
- figure 1: une vue en perspective d'une aile avant en matériau thermoplastique d'un véhicule automobile selon l'état de l'art;
- figures 2a à 2d: une vue en perspective d'une aile avant en matériau thermoplastique également d'un véhicule automobile, deux vues en coupe transversale de la joue de cette aile selon l'invention.
- figure 3 : une vue en perspective d'une variante d'un diffuseur selon l'invention.

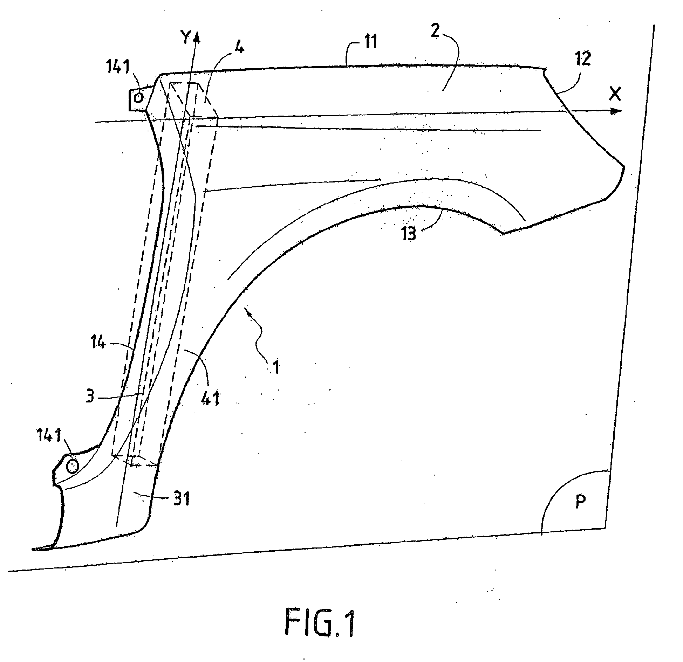

Sur la figure 1, on a représenté une aile avant droite 1 faite en une seule pièce monobloc en matériau thermoplastique dit « à mémoire de forme », du type de celui commercialisé sous la dénomination commerciale NORYL©. Cette aile est susceptible de reprendre sa forme initiale après avoir subi un choc et avoir été fixée à nouveau sur la carrosserie du véhicule automobile qui en est équipé.

Cette aile avant droite 1 présente tout d'abord un bord supérieur 11 dont le profil est destiné à épouser celui du capot du véhicule automobile, un bord avant droit 12 au profil conjugué de celui d'un phare avant droit du véhicule, un bord inférieur 13 au profil conjugué de celui de la roue avant droite du véhicule et un bord arrière droit 14 comprenant des pattes de fixation 141 de l'aile avant à la carrosserie.

Cette aile avant droite 1 selon l'état de l'art présente un plan de forme générale (P) qui constitue la peau 2 de l'aile qui s'étend selon un axe longitudinal x sensiblement confondu avec celui longitudinal du véhicule. La partie arrière de l'aile est constituée de la joue 3 de l'aile qui s'étend selon un axe y sensiblement perpendiculaire à l'axe x.

Pour amortir les bruits qui sont émis d'une part par le groupe moto-propulseur implanté sous le capot avant du véhicule et d'autre part par les turbulences aérodynamiques autour du passage de roue et les chuintements du pneu sur différents types de sol, et qui se propagent entre l'aile avant 1 et la carrosserie du véhicule, l'aile avant 1 selon l'état de l'art comprend, en tant que moyens d'amortissement des bruits 4, un pain de mousse 41 représenté schématiquement par un parallélépipède sur la figure 1.

Ce pain de mousse 41 est collé ou coincé par déformation sur la face intérieure 31 de la joue 3 selon le plan de forme de la peau 2 et est constitué d'une multitude de cellules fermées ensachées dans un sac étanche. Ce sac étanche a une longueur sensiblement égale à la hauteur h de la joue d'aile 3 et est fixé directement sur celle-ci sur la ligne de montage du véhicule automobile immédiatement avant l'accrochage de l'aile sur la carrosserie.

La fixation de ce pain de mousse 41 sur l'aile selon l'état de l'art n'est possible qu'après le passage de cette dernière dans les étuves de peinture car le pain ne résiste pas aux températures régnant dans ces étuves.

Ce pain de mousse 41 absorbe de manière globalement satisfaisante les bruits décrits ci-dessus. Cependant, cette solution est coûteuse car d'une part, le pain en lui-même est coûteux et d'autre part, son collage sur ligne de fabrication finale du véhicule augmente le temps de montage unitaire de l'aile avant 1 et donc le coût de fabrication.

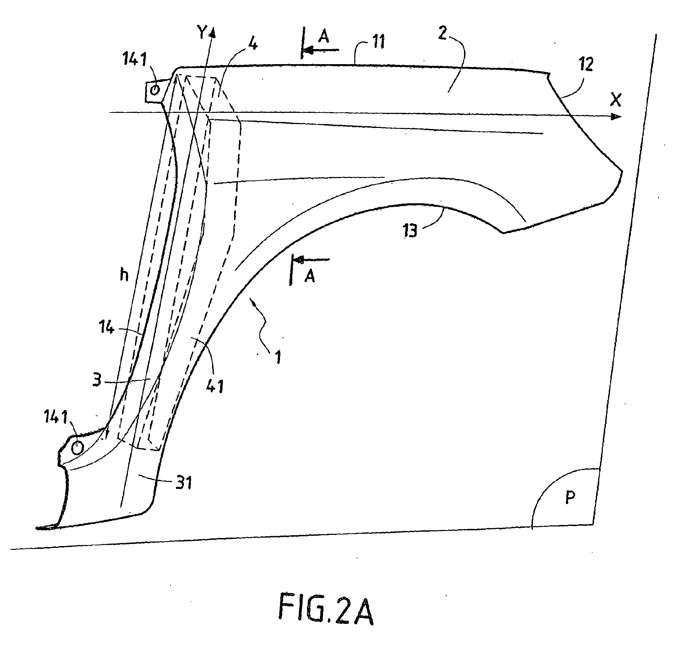

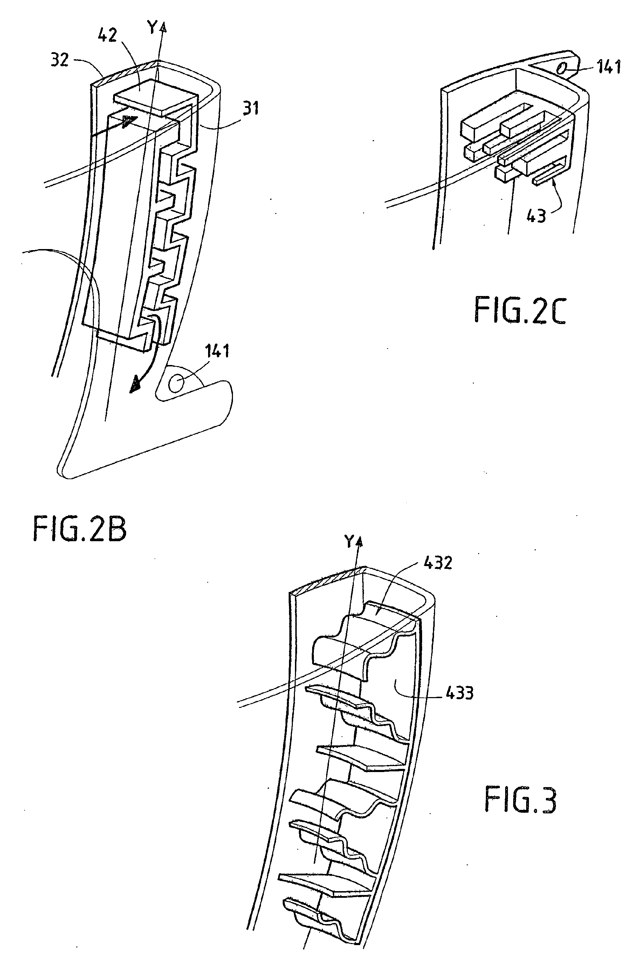

L'aile avant droite 1 selon l'invention représentée aux figures 2a à 2c a exactement les mêmes formes et mêmes dimensions que celle selon l'état de l'art décrite ci-dessus et est fabriquée dans le même matériau thermoplastique.

Par souci de clarté, les signes de référence communs à l'aile avant selon l'état de l'art et selon l'invention sont les mêmes.

L'aile avant droite 1 selon l'invention comprend tout d'abord, en tant que moyens d'amortissement des bruits 4, une pluralité de chicanes 42 continues de section rectangulaire formant labyrinthe qui s'étend sur une hauteur H également sensiblement égale à la hauteur de la joue 3.

Cette pluralité de chicanes 42, faite dans le même matériau que l'aile, c'est à dire en NORYL©, est directement surmoulée sur la partie 32 de la joue 3 de l'aile 1 qui constitue la branche de la joue 3 de section en U parallèle au plan de forme (P) de la peau 2. Le surmoulage des chicanes 42 sur un plan parallèle à celui du plan de forme (P) permet notamment d'éviter le risque de retassures desdites chicanes au montage de l'aile sur la caisse.

Avec de telles chicanes 42, les bruits précités sont amortis par augmentation de leur longueur de propagation le long de la joue 3, comme indiqué par le parcours fléché, en créant donc un chemin de propagation entre l'aile 1 et le côté de la caisse sur lequel elle est fixée.

Selon le mode de réalisation préféré illustré, l'aile avant droite 1 comprend en outre, en tant que moyens d'amortissement 4, un diffuseur 43 sous la forme d'un cube fragmenté en plusieurs barrettes 431 de taille et de forme toute différente entre elles.

Ce cube 43, réalisé dans le même matériau thermoplastique que l'aile, est selon le mode de réalisation illustré fixé par clippage en dessous des chicanes 42 au niveau de la base en U de la joue 3 à son extrémité inférieure entre les parties 31 et 32.

Ce cube 43 permet de réfléchir au moins une partie des bruits précités selon une direction aléatoire. Les ondes sonores ainsi réfléchies n'ont pas de direction de propagation privilégiée et la formation d'ondes acoustiques stationnaires derrière la joue 3 d'aile d'éviter.

Sur la figure 3, on a représenté une variante de réalisation du diffuseur 43 sous la forme de lamelles 432 ondulées, disposées selon des directions non parallèles entre elles, et toutes reliées entre elles par une base 433. Ces lamelles 432, réalisées également dans le même matériau thermoplastique que l'aile, peuvent être utilisées indépendamment ou concomitamment avec le cube fragmenté 43.

L'invention qui vient d'être décrite est particulièrement avantageuse car elle permet d'amortir les bruits de faible et moyenne fréquence susceptible de se propager entre l'aile et la caisse du véhicule automobile.

De plus, il n'y a pas à apporter d'autres améliorations majeures dans les autres pièces et leur agencement pour réduire le niveau sonore dans l'habitacle du véhicule, tel que par exemple dans les joints des portes avant.

En outre, les moyens d'amortissement des bruits conformes à l'invention sont d'une grande robustesse mécanique et ils présentent une grande tenue dans le temps.

Enfin, l'invention permet de réduire considérablement le temps de montage de l'aile munie de moyens d'amortissement des bruits sur la ligne de fabrication du véhicule.

Bien entendu, il va de soi que différentes améliorations peuvent être apportées à l'aile 1 de véhicule automobile qui vient d'être décrite sans pour autant sortir du cadre de l'invention. Ainsi, le diffuseur utilisé en combinaison avec les chicanes selon l'invention peut également être fixé sur une autre partie de la joue 3 et avoir des dimensions différentes. Par exemple, il peut être également sur une partie substantielle de la hauteur de la joue 3 en constituant une barrière positionnée devant les chicanes 42, c'est à dire plus proche du passage de roue.

De même, la forme, les dimensions et le matériau constitutif des chicanes 42 peuvent être modifiés en fonction du profil des ailes et des caractéristiques des trains roulants et du groupe motopropulseur du véhicule. Par exemple, il peut être prévu des chicanes 42 de section transversale en S.

## Revendications

1. Aile (1) de véhicule automobile, telle qu'une aile avant, dont un bord (13) présente un profil circulaire destiné à épouser celui d'une roue du véhicule et comprenant une peau (2) qui s'étend selon un axe longitudinal (x), au moins une joue (3) venue de matière avec la peau et qui s'étend selon un axe (y) sensiblement perpendiculaire à la peau et des moyens (4) pour amortir les bruits qui se propagent, à l'arrêt ou lors du roulage du véhicule, entre l'aile et la partie de carrosserie sur laquelle elle est destinée à être fixée, lesdits moyens d'amortissement des bruits étant fixés au moins partiellement à l'aile, **caractérisée en ce que** les moyens d'amortissement des bruits comprennent une pluralité de chicanes (42) formant labyrinthe fixées sur une partie substantielle de la hauteur H d'une partie de la joue et adaptées pour augmenter la longueur de propagation desdits bruits le long de la joue d'aile.

2. Aile selon la revendication 1, **caractérisée en ce que** les chicanes ont une section rectangulaire.

3. Aile selon la revendication 1 ou 2, **caractérisée en ce que** les chicanes sont fixées par collage, clippage ou soudage à la joue.

4. Aile selon l'une des revendications précédentes dans laquelle la joue et la peau constituent une pièce monobloc , **caractérisée en ce que** les chicanes sont réalisées dans le même matériau que la pièce monobloc.

5. Aile selon la revendication 4, **caractérisée en ce que** les chicanes sont surmoulées directement sur la joue.

6. Aile selon l'une des revendications 4 ou 5,
**caractérisée en ce qu'**elle est en matériau thermoplastique.

7. Aile selon l'une des revendications précédentes, **caractérisée en ce que** les moyens d'amortissement des bruits comprennent en outre un diffuseur (43) fixé à une partie de la joue et adapté pour réfléchir au moins une partie desdits bruits selon une direction aléatoire.

8. Aile selon la revendication 7, **caractérisée en ce que** le diffuseur (43) est constitué d'un ou plusieurs cubes fragmenté (s) et/ou de lamelles ondulées (432) disposées selon des directions non parallèles entre elles.

9. Aile selon l'une de revendications 7 ou 8, **caractérisée en ce que** le diffuseur est fixé sur une partie substantielle de la hauteur de la joue en étant situé devant les chicanes.

10. Aile selon l'une de revendications 7 ou 8, **caractérisée en ce que** le diffuseur est fixé à l'extrémité inférieure de la joue.

11. Aile selon l'une quelconque des revendications précédentes, **caractérisée en ce que** la partie de la joue (31,32) sur laquelle est fixée la pluralité de chicanes et éventuellement le diffuseur s'étend selon le plan de forme (P) de la peau ou selon un autre plan parallèle audit plan de forme.

12. Véhicule automobile comprenant au moins une aile avant selon l'une quelconque des revendications 1 à 11.

## Claims

1. Motor vehicle wing (1), such as a front wing, one edge (13) of which has a circular profile intended to fit against that of a wheel of the vehicle and comprising a skin (2) that extends along a longitudinal axis (x), at least one flange (3) moulded together with the skin and extending along an axis (y) substantially perpendicular to the skin and means (4) for damping the noise that is propagated, when the vehicle is stopped or being driven, between the wing and the part of body to which it is intended to be fixed, said noise-damping means being fixed at least partly to the wing, **characterised in that** the noise-damping means comprise a plurality of baffles (42) forming a labyrinth fixed over a substantial part of the height H of a portion of the flange and adapted to increase the propagation length of said noises along the wing flange.

2. Wing according to Claim 1, **characterised in that** the baffles have a rectangular section.

3. Wing according to Claim 1 or 2, **characterised in that** the baffles are fixed by gluing, clipping or welding to the flange.

4. Wing according to one of the preceding claims in which the flange and the skin constitute a single-piece part, **characterised in that** the baffles are made of the same material as the single-piece part.

5. Wing according to Claim 4, **characterised in that** the baffles are moulded directly over the flange.

6. Wing according to one of Claims 4 or 5, **characterised in that** it is made of thermoplastic material.

7. Wing according to one of the preceding claims, **characterised in that** the noise-damping means also comprise a diffuser (43) fixed to part of the flange and adapted to reflect at least part of said noises in a random direction.

8. Wing according to Claim 7. **characterised in that** the diffuser (43) is constituted by one or more fragmented cubes and/or corrugated blades (432) arranged in directions that are not parallel to each other.

9. Wing according to one of Claims 7 or 8, **characterised in that** the diffuser is fixed over a substantial part of the height of the inner panel while being located in front of the baffles.

10. Wing according to one of Claims 7 or 8, **characterised in that** the diffuser is fixed to the lower end of the inner panel.

11. Wing according to any one of the preceding claims, **characterised in that** the part of the flange (31, 32) over which the plurality of baffles and possibly the diffuser is fixed, extends over the shape plane (P) of the skin or over another plane parallel to that the shape plane.

12. Motor vehicle comprising at least one front wing according to any one of Claims 1 to 11.

## Patentansprüche

1. Kotflügel (1) für ein Kraftfahrzeug, beispielsweise vorderer Kotflügel, der einen Rand (13) mit kreisförmigem Profil aufweist, das sich an das Profil eines Fahrzeugrads anschmiegt, und der eine Außenschicht (2), die sich in einer Längsachse (x) erstreckt, mindestens eine Wange (3) aus dem gleichen Material wie die Außenschicht, die sich in einer zu dieser im Wesentlichen senkrechten Achse (y) erstreckt, sowie Mittel (4) zum Dämpfen der Geräusche umfasst, die sich im Stillstand oder beim Fahren des Fahrzeugs zwischen dem Kotflügel und an dem Karosserieabschnitt ausbreiten, an dem er befestigt wird, wobei die Geräuschdämpfungs-Mittel zumindest teilweise am Kotflügel befestigt sind, **dadurch gekennzeichnet, dass** die Geräuschdämpfungs-Mittel mehrere Ablenkplatten (42) aufweisen, die ein Labyrinth bilden und über einen wesentlichen Teil der Höhe H eines Abschnitts der Wange befestigt sind und die Ausbreitungslänge der Geräusche entlang der Wange des Flügels erhöhen.

2. Kotflügel nach Anspruch 1, **dadurch gekennzeichnet, dass** die Ablenkplatten einen rechteckigen Querschnitt haben.

3. Kotflügel nach Anspruch 1 oder 2, **dadurch gekennzeichnet, dass** die Ablenkplatten durch Kleben, Klammern oder Schweißen an der Wange befestigt sind.

4. Kotflügel nach einem der vorhergehenden Ansprüche, bei dem die Wange und die Außenschicht aus einem Stück sind, **dadurch gekennzeichnet, dass** die Ablenkplatten aus dem gleichen Material wie das einstückige Teil sind.

5. Kotflügel nach Anspruch 4, **dadurch gekennzeichnet, dass** die Ablenkplatten direkt an der Wange angeformt sind.

6. Kotflügel nach einem der Ansprüche 4 oder 5, **dadurch gekennzeichnet, dass** er aus Thermoplast ist.

7. Kotflügel nach einem der vorhergehenden Ansprüche, **dadurch gekennzeichnet, dass** die Geräuschdämpfungs-Mittel darüber hinaus einen Diffusor (43) aufweisen, der an einem Abschnitt der Wange befestigt ist und zumindest einen Teil der Geräusche in einer zufälligen Richtung reflektieren kann.

8. Kotflügel nach Anspruch 7, **dadurch gekennzeichnet, dass** der Diffusor (43) aus einem oder mehreren fragmentierten Würfeln und/oder gewellten Lamellen (432) besteht, die in zueinander nicht parallelen Richtungen angeordnet sind.

9. Kotflügel nach einem der Ansprüche 7 oder 8, **dadurch gekennzeichnet, dass** der Diffusor über einen wesentlichen Teil der Höhe der Wange befestigt und vor den Ablenkplatten angeordnet ist.

10. Kotflügel nach einem der Ansprüche 7 oder 8, **dadurch gekennzeichnet, dass** der Diffusor am unteren Ende der Wange befestigt ist.

11. Kotflügel nach einem der vorhergehenden Ansprüche, **dadurch gekennzeichnet, dass** sich der Abschnitt der Wange (31, 32), an dem die Ablenkplatten und möglicherweise der Diffusor befestigt sind, in der Formebene (P) der Außenschicht oder in einer anderen Ebene erstreckt, die parallel zur Formebene ist.

12. Kraftfahrzeug mit mindestens einem vorderen Kotflügel nach einem der Ansprüche 1 bis 11.
